# EUROPEAN PATENT SPECIFICATION

(11) **EP 0 563 494 B1**
(45) Date of publication and mention of the grant of the patent: **06.12.1995**
(21) Application number: 92500104.2
(22) Date of filing: 07.08.1992
(51) Int. Cl.: F16C 3/03, F16D 3/06

(54) **Jointed and telescopic transmission shaft**
Antriebswelle mit teleskopischer Kupplung
Arbre de transmission à accouplement télescopique

(30) Priority: 30.03.1992 ES 9201001 U
(43) Date of publication of application: 06.10.1993
(73) Proprietor: TEKA INDUSTRIAL, S.A., E-39011 Santander (ES)
(72) Inventor: Gomez Casuso, José, Santander (ES)
(74) Representative: Carpintero Lopez, Francisco

(56) References cited:
- EP-A- 0 164 792
- CH-A- 195 716
- DE-A- 3 702 475
- DE-U- 8 704 075
- FR-A- 615 379
- FR-A- 2 402 800
- GB-A- 2 079 886
- GB-A- 2 147 086
- US-A- 2 696 090
- US-A- 4 422 794
- US-A- 4 504 164
- US-A- 4 911 034

## Description

### OBJECT OF THE INVENTION

The present invention relates to a transmission shaft of the jointed and telescopic kind, for instance as commonly used in kitchens to transmit movement over from the relevant control to an element that needs to be activated, for instance a gas tap or power switch, although this is naturally only one of the manifold examples in which jointed and telescopic transmission shafts can be used in practice, the object of the invention being applicable to any and all of them.

### BACKGROUND OF THE INVENTION

A great many practical cases exist as above-mentioned where a transmission must be used to link two laterally divergent points. In such cases, transmission shafts made up of three sectors are used, namely a larger middle sector and two end sectors which are coupled to the elements to be linked, the middle sector being in turn linked to the end sectors by means of cardan or like joints which allow transmission to be effected effortlessly even if there is a large lateral divergence between the repeatedly mentioned elements to be linked.

The distance between such points or elements is also variable at other times, and the shaft must hence not only be jointed but of adjustable length.

A jointed and telescopic transmission shaft according to the preamble of claim 1 is known from CH-A-195 716.

Furthermore it is well known to provide telescopic transmission shafts with means which prevent disengagement between two telescopic members (e.g. EP-A-0 164 792 and US-A-2 696 090).

### DESCRIPTION OF THE INVENTION

The transmission shaft subject of the invention as defined in claim 1 fully solves the above-mentioned two requirements, allowing any manner of lateral divergence between the elements to be linked, and any distance variation therebetween, obviously within certain reasonable limits.

More specifically, and in order to achieve the above, the jointed and telescopic transmission shaft according to the invention has the said middle sector structured as two telescopic tubes one of which coaxially plays inside the other and being basically cylindrical, but with a broad flat faceting complementing one another and close to the mouth thereof, the tube of larger diameter having a small rectangular window and the tube of smaller diameter having a large resiliently deformable tongue defined by two longitudinal notches and capped by a claw shaped as a sawtooth fostering the insertion of one tube into the other and which also acts as an abutment to the extension of the shaft, preventing accidental disengagement of its two sectors, locking itself automatically into the hole of the tube of larger diameter.

In order to enhance the adjustment between the two tubes that make up this middle larger shaft sector, with the lowest friction factor, the tube of smaller diameter has been conceived with its edges provided with thickenings which constitute linear guides to slide into the tube of larger diameter.

Finally, and in accordance with a preferred embodiment of the invention, a supplementary part has been conceived for the aforesaid tubes as a shaft extension which also comprises a tubular body, like the tube of larger diameter as above mentioned, and provided at one of its ends with the same hole for the claw to be coupled in the tube of smaller diameter, while at the other end it widens to couple tightly around the tube of larger diameter, which coupling is held in place by a stepped stopper that simultaneously couples in the hole of the said tube of larger diameter and in another hole operatively provided in the actual extension.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is a perspective view of the jointed and telescopic transmission shaft made in accordance with the object of the present invention.
Figure 2.- Is a cross-section close view of the tube of smaller diameter used therein.
Figure 3.- Is a partial perspective close view of the complementary ends of the two tubes used in the shaft, disengaged in order to show their structure more clearly.
Figure 4.- Is, again, a perspective view of the complementary part which acts as an extension that may be coupled to the structure of figure 1.
Figure 5.- Is finally a general perspective view similar to figure 1 but where the shaft is also provided with the extension shown in figure 4.

### PREFERRED EMBODIMENT OF THE INVENTION

It can in light of these figures be seen that the transmission shaft subject hereof comprises, as any conventional shaft of this kind, a pair of end bushes (1) and (2) duly bevelled to achieve a cotter effect in the coupling thereof to the shafts of the elements to be linked, the said end bushes (1) and (2) being jointedly attached by means of cardan or like couplings (3) to a large middle sector that in this case, and now in accordance with the characteristics of the invention, comprises two tubes (4) and (5) coaxially coupled to each other and which can telescopically play one inside the other to conveniently extend or shorten the transmission shaft as a whole.

Both the tube (4) and the tube (5) are basically cylindrical in shape but with a large longitudinal flat faceting (6-6') that also acts as a cotter to prevent rotatory movement of the tubular elements with respect to each other, the tube (4) of smaller diameter being provided at its free end with two longitudinal parallel notches (7) defining a resiliently deformable tongue (8) capped at its free end by a claw (9), shaped as an outwardly projecting sawtooth, designed to be locked in a small window or hole (10) in turn operatively established at the free end of the tube (5) of larger diameter, also on the flat surface thereof (6'), such that upon coupling the tube (4) inside the tube (5) the claw (9) automatically draws back to facilitate the said coupling and allow the free displacement of one tube inside the other, in order for the shaft as a whole to be adjusted to the final working length in each specific case, but acting as an abutment for the extension of the shaft, preventing accidental disengagement of the tubes (4) and (5), for in such movement and upon arriving at the window (10), it automatically springs back into the same.

This same system has been envisaged to fix the other ends of the tubes (4) and (5) to the cardan joints (3) that will in turn be provided with necks to be plugged into the said tubes, provided with the same resiliently deformable tongue, and likewise provided with the same claw that shall be coupled to the same kind of hole or window.

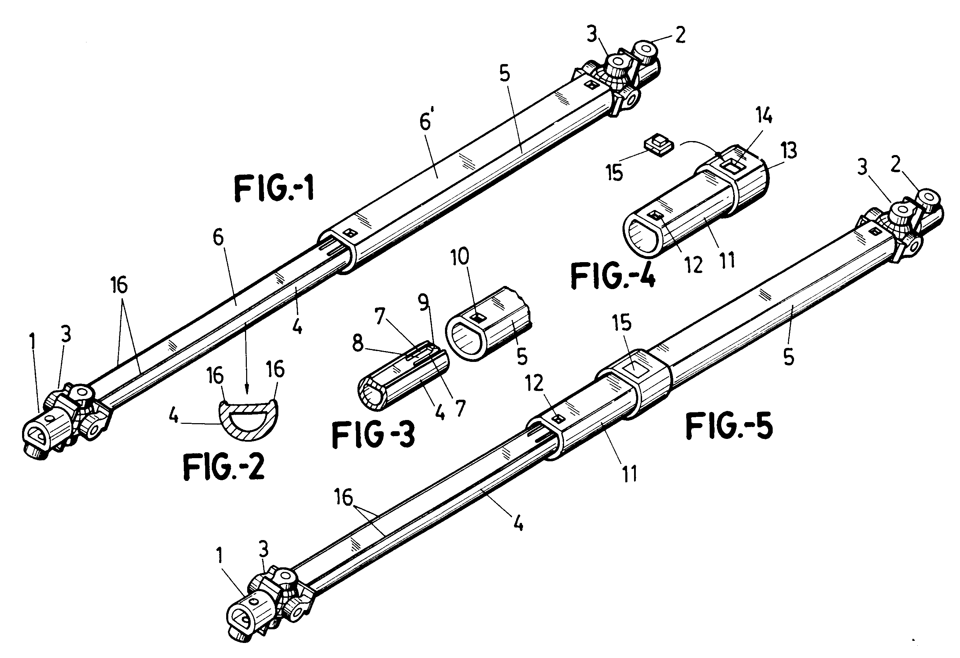

To supplement the above structure and in order to be able to extend the maximum length of the transmission shaft, whenever this is required and as shown in figure 5, the existence of a supplementary part (11) has been envisaged, as shown in detail in figure 4, comprising a tube that is formally and dimensionally like the tube (5) of greater diameter, provided at one of its ends with a small window or hole (12) that is itself formally, dimensionally and positionally like the window (10) in the said tube (5) of larger diameter, but provided at its other end with a wider sector (13) designed to receive and couple tightly to the free end of the tube (5) of larger diameter, in turn provided with a window (14) which is upon coupling designed to face the hole (10) in the tube (5) but which is larger in size than the said hole (10), this window (14) being tightly fitted, as a fixing element for this supplementary part or extension (11), with a stepped stopper (15) having a sector that is formally and dimensionally like the window (14) and that adapts to the latter, and a second bottom sector that is formally and dimensionally like the window or hole (10) and that is simultaneously positioned in the latter, thereby for a perfect fit to be achieved between both parts, the tube (5) of larger diameter and the extension (11), as shown in figure 5.

Finally, it only remains to be said, as above mentioned and in order to achieve a perfect fit between the tubes (4) and (5), with the least possible friction between them, that the tube (4) of smaller diameter has been designed with its edges provided with two ribs (16) making up linear areas in contact with the inner surface of the tube (5) of larger diameter.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. A jointed and telescopic transmission shaft incorporating end bushes (1, 2) to fix the elements to be linked, which bushes are jointedly attached by cardan or like couplings (3) to a middle arm largely making up the said transmission shaft, the said middle arm being constructed with two coaxial and telescopic tubes (4, 5) with a shape acting as a cotter to prevent them from rotating with respect to each other, characterised in that the tubes are basically cylindrical in shape with a flat faceting (6, 6'), the tube (4) of smaller diameter is designed at its free end and on its flat faceting (6) to have a pair of parallel longitudinal notches (7) defining a resiliently deformable tongue (8) capped by an outwardly projecting sawtooth locking claw (9), the tube (5) of larger diameter is provided, also at its free end and on its flat faceting (6'), with a small window or hole (10) that can receive the said claw acting as an abutment to the extension of the shaft, preventing disengagement between the two tubes thereof, and the said tubes have their ends for jointed coupling provided with similar holes or windows for the coupling thereof to such joints through similar tongues and claws on the necks of the latter.

2. A jointed and telescopic transmission shaft, as in claim 1, characterised in that the tube of smaller diameter is provided on its longitudinal edges with two thickenings (16) defining linear areas in contact with the inner surface of the tube of larger diameter.

3. A jointed and telescopic transmission shaft, as in the above claims, characterised in that the said tubes are complemented with a supplementary part (11) acting as an extension, likewise comprising a tube, with a larger sector that is formally and dimensionally like the tube of greater diameter, with one of its ends provided on its flat faceting with the same hole or window (12) for the claw of the tube of smaller diameter to be coupled, and its other end having a thickening (13) for the tube of larger diameter to be plugged into and coupled tightly, such thickened end (13) being provided on its flat faceting with a window (14) which upon being mounted operatively faces the window or hole (10) in the tube of larger diameter, which is larger in size than the latter and which is complemented by a stepped stopper (15) that can be tightly coupled therein through a larger surface sector, the bottom sector simultaneously fitting into the hole or window in the tube of larger diameter.

## Patentansprüche

1. Antriebswelle mit teleskopischer Kupplung mit äusseren Buchsen (1, 2) zur Befestigung an den zu verbindenden Teilen, welche Buchsen über Kardanwellen (3) oder dgl. gelenkig an einem dazwischen liegenden Schenkel angebracht werden, der hauptsächlich die genannte Antriebswelle bildet, wobei dieser mittlere Schenkel aus zwei koaxialen teleskopischen Rohren (4, 5) besteht, die so ausgebildet sind, dass eine Keilwirkung erzielt wird, welche eine Schwenkbewegung des einen Rohrs gegenüber dem anderen verhindert, dadurch gekennzeichnet, dass die Rohre eine im Wesentlichen zylinderförmige Gestalt mit einer flachen Fläche (6, 6') aufweisen und ausserdem vorgesehen ist, dass das Rohr geringeren Durchmessers (4) an seinem freien Ende und an der flachen Fläche (6) zwei parallele Längsschnitte (7) aufweist, die eine elastisch verformbare Lasche (8) bilden, welche in einem im Profil sägezahnförmigen und nach aussen gerichteten Rastansatz (9) endet, während das Rohr grösseren Durchmessers (5) an seinem freien Ende und an der flachen Fläche (6') ein kleines Fenster bzw. eine kleine Öffnung (10) besitzt, welche den Ansatz aufnehmen kann, der als Begrenzung der Wellenverlängerung dient und eine Entkupplung der beiden Rohre verhindert, wobei diese Rohre an ihren den Gelenkverbindungen entsprechenden Enden ähnliche Öffnungen oder Fenster besitzen, um sie über gleiche Laschen und Ansätze, die sich an den Hälsen letzterer befinden, an den Gelenken anzubringen.

2. Antriebswelle mit teleskopischer Kupplung, nach Anspruch 1 dadurch gekennzeichnet, dass das Rohr geringeren Durchmessers in Übereinstimmung mit seinen Längskanten Verdickungen (16) aufweist, welche lineare Kontaktzonen mit der Innenfläche des Rohres geringeren Durchmessers bilden.

3. Anriebswelle mit teleskopischer Kupplung, nach den vorstehenden Ansprüchen dadurch gekennzeichnet, dass mit den genannten Rohren, als Verlängerung, ein zusätzliches Teil (11) zusammenwirkt, das ebenfalls aus einem Rohr besteht und einen Bereich aufweist, der in Form und Abmessungen mit dem Rohr grösseren Duirchmessers übereinstimmt und an seinem einen Ende sowie an der flachen Fläche dieselbe Öffnung bzw. dasselbe fenster (12) für die Befestigung des Ansatzes des Rohres geringeren Durchmessers besitzt und am anderen Ende eine Verbreitung (13) aufweist, um ein Eindrücken oder Einstecken in das Ende des Rohres grösseren Durchmessers zu ermöglichen, wobei dieses verbreiterte Ende (13) in seinem flachen Bereich über ein Fenster (14) verfügt, das in Montagestellung dem Fenster bzw. der Öffnung (10) des Rohres grösseren Durchmessers gegenüberliegt und grösser ist als dieses letzte Fenster und mit welchem ein abgestufter Stopfen (15) zusammenwirkt, der über den flächigen Bereich grösserer Abmessungen in dasselbe eingedrückt wird und dessen unterer Sektor gleichzeitig in der Öffnung bzw. im Fenster des Rohres grösseren Durchmessers einrastet.

## Revendications

1. Arbre de transmission à accouplement télescopique qui comprend des douilles extrêmes (1, 2) de fixation aux éléments à unir, douilles qui s'unissent de façon articulée, au moyen de transmissions (3) du type cardan ou similaire, à un bras intermédiaire qui constitue la plus grande partie de l'arbre de transmission en question, ce bras intermédiaire étant structuré à partir de deux tubes coaxiaux et télescopiques (4, 5) présentant une configuration qui agit comme une clavette empêchant la rotation d'un des tubes par rapport à l'autre. Cet arbre de transmission est caractérisé par le fait que les tubes ont une configuration essentiellement cylindrique présentant une facette plane (6, 6') et il a été prévu que le tube (4) au diamètre le plus petit présente, à son extrémité libre et sur sa facette plane (6), deux découpages (7) longitudinaux et parallèles qui déterminent une languette (8) susceptibles de déformation élastique terminée par un onglet (9) d'emboîtement, à profil en dent de scie projeté vers l'extérieur, alors que le tube (5) au diamètre le plus grand présente, également à son extrémité libre et sur sa facette plane (6') une petite fenêtre ou orifice (10) susceptible de recevoir ledit onglet qui agit comme moyen de limitation de l'allongement de l'arbre et évite le désaccouplement de ses deux tubes; ces deux tubes possèdent, à leurs extrémités qui correspondent aux unions articulées, des orifices ou fenêtres similaires destinées à leur accouplement à ces articulations à travers des languettes et des onglets similaires à ceux qui existent dans les cols de celles-ci.

2. Arbre de transmission à accouplement télescopique selon la première revendication, caractérisé par le fait que le tube au diamètre le plus petit présente, au niveau de ses deux arêtes longitudinales, des nervures (16) déterminant des zones linéaires de contact avec la surface interne du tube au diamètre le plus grand.

3. Arbre de transmission à accouplement télescopique selon les revendications qui précèdent, caractérisé par le fait que les tubes mentionnés plus haut reçoivent la collaboration d'une pièce complémentaire (11) fonctionnant comme rallonge et consistant également en un tube possédant un secteur principal coïncidant en forme et en dimensions avec le tube au diamètre le plus grand, rallonge présentant, à une de ses extrémités et sur sa facette plane, le même orifice ou fenêtre (12) pour l'accouplement de l'onglet du tube au diamètre le plus petit et, à l'autre de ses extrémités, un évasement (13) pourvu de sa facette plane et d'une fenêtre (14) qui, en situation de montage, se trouve fonctionnellement disposée en face de la fenêtre ou orifice (10) du tube au diamètre le plus grand et qui a des dimensions plus grandes que cette dernière et avec laquelle collabore un bouchon à échelons (15) qui y est accouplable à pression à travers son secteur superficiel aux dimensions plus grandes, le secteur du fond s'emboîtant simultanément dans l'orifice ou fenêtre du tube au diamètre le plus grand.
